# EUROPEAN PATENT APPLICATION

(11) **EP 4 757 328 A1**
(43) Date of publication of application: **10.06.2026**
(21) Application number: 25221041.4
(22) Date of filing: 05.12.2025
(51) Int. Cl.: H04N 23/51, B60R 11/04, H04N 23/54, H04N 23/55, H04N 23/57

(54) **CAMERA MODULE FOR A VEHICLE VISION SYSTEM**

(30) Priority: 09.12.2024 US 202463729878 P; 25.11.2025 US 202519400265
(71) Applicant: ZF Friedrichshafen AG, 88046 Friedrichshafen (DE)
(72) Inventor: Murray, Neil, Wixom, Michigan, 48393 (US); Melton, Andrew, Walled Lake, Michigan, 48390 (US); Melton, Paul, White Lake, Michigan, 48383 (US)
(74) Representative: Ege Lee & Roider Patentanwälte

(57) **Abstract**

Camera modules for a vehicle vision system are disclosed herein. Each camera module comprises a housing element, a circuit board; an imaging sensor operatively connected to the circuit board; and a lens arrangement that includes at least one lens element and an optical path extending through the at least one lens element and the imaging sensor. The housing element is molded over the circuit board to encapsulate the circuit board within the housing element and fixing the imaging sensor within the housing element. The housing element includes a mounting arrangement that cooperates with a corresponding mounting arrangement disposed on the lens arrangement to secure the lens arrangement to the housing element.

## Description

### CROSS-REFERENCE TO RELATED APPLICATIONS

This application claims priority to U.S. Provisional Application No. 63/729,878, filed December 9, 2024, and U.S. Nonprovisional Application No. 19/400,265, filed November 25, 2025, the disclosures of which is incorporated herein by reference in its entirety.

### TECHNICAL FIELD

The present disclosure relates generally to the field of vehicle vision systems, and more particularly to a camera module that includes at least one imaging sensor.

### BACKGROUND

There is an increased need for vehicle camera systems to provide a driver with a view of areas around the vehicle which may not be in a direct field of view of a vehicle operator. For example, these areas may include the front of the vehicle, near the region close to the front of the vehicle, an area along the passenger side of the vehicle, as well as a region along the drivers' side of the vehicle, rearward of the driver, and the area or region rearward of the vehicle that cannot be seen directly or indirectly through the rearview mirror. The use of these type of camera systems aid in the driver's knowledge of the area immediately surrounding the vehicle, and informs the driver of potential obstacles for completion of maneuvers.

Traditionally, camera systems have included a housing structure constructed of metal, for durability, and various sealing elements have been provided to protect against debris, dirt, dust and/or water from entering an interior of the housing to protect the camera and/or sensor elements against damage. Because known sealing elements may not adequately provide a substantially water-tight seal for the metal housings, or may degrade over time, the camera and/or sensor components can be damaged, leading to instability of the image displayed or even inoperability of such components. As these components are costly to manufacture and implement in such arrangements, the inability to adequately seal against such ingress of debris/water are detrimental.

While existing solutions have been employed that include use of separately molded components and with mechanical fasteners and adhesives, such arrangements require tight tolerances to adequately align the lens arrangements with the imager to provide a suitable image to be displayed to a driver. Moreover, with additional components, vibration of the different components with respect to each other can lead to an instability of the image. Accordingly, there is a need for an improved camera structure to address such issues.

### SUMMARY

Camera modules for a vehicle vision system are disclosed herein. Each camera module comprises a housing element, a circuit board; an imaging sensor operatively connected to the circuit board; and a lens arrangement that includes at least one lens element and an optical path extending through the at least one lens element and the imaging sensor. The housing element is molded over the circuit board to encapsulate the circuit board within the housing element and fixing the imaging sensor within the housing element. The housing element includes a mounting arrangement that cooperates with a corresponding mounting arrangement disposed on the lens arrangement to secure the lens arrangement to the housing element.

### BRIEF DESCRIPTION OF THE DRAWINGS

The foregoing and other features and advantages of the present disclosure will become apparent to those skilled in the art to which the present disclosure relates upon reading the following description with reference to the accompanying drawings, in which:
FIG. 1 is an exploded view of a camera module subassembly in accordance with one exemplary arrangement;
FIG. 2 is a cross-sectional view of the camera module subassembly with a lens barrel mounted therein;
FIG. 3 is a bottom perspective view of a lens adapter;
FIG. 4 is a sectioned view of the camera module subassembly;
FIG. 5 is a perspective assembly view of a camera module in accordance with an exemplary arrangement;
FIGS. 6A-6C are various views of an exemplary lens barrel;
FIG. 7 is a cross-sectional view of the camera module of FIG. 5;
FIG. 8 is a top perspective view of the camera module of FIG. 5;
FIG. 9 is a bottom perspective view of the camera module of FIG. 5;
FIGS. 10A -10B are perspective views of placement of mounting ears on a printed circuit board;
FIGS. 11A-11B are an exploded views of an exemplary view of a camera module;
FIG. 12 is a perspective view of an exemplary arrangement of a camera module subassembly;
FIG. 13 is a cross-sectional view of the camera module of subassembly of FIG. 12;
FIG. 14 is a partially exploded perspective view of a lens assembly, and a lens adapter;
FIG. 15 is a perspective view of the lens assembly of FIG. 14 connected to the lens adapter;
FIG. 16 is a partially exploded perspective view of a camera module subassembly;
FIG. 17 is a partially exploded view of the lens assembly of FIG. 14 and the camera module subassembly of FIG. 16;
FIG. 18 is a perspective view of the lens assembly of FIG. 14 connected to the camera module subassembly of FIG. 16, and
FIG. 19 is a cross-sectional view of an assembled camera module.

### DETAILED DESCRIPTION

Referring now to the discussion that follows, and to the drawings, illustrative approaches to the disclosed systems and methods are shown in detail. Although the drawings represent some possible approaches, the drawings are not necessarily to scale and certain features may be exaggerated, removed, or partially sectioned to better illustrate and explain the present disclosure. Further, the descriptions set forth herein are not intended to be exhaustive or otherwise limit or restrict the claims to the precise forms and configurations shown in the drawings and disclosed in the following detailed description.

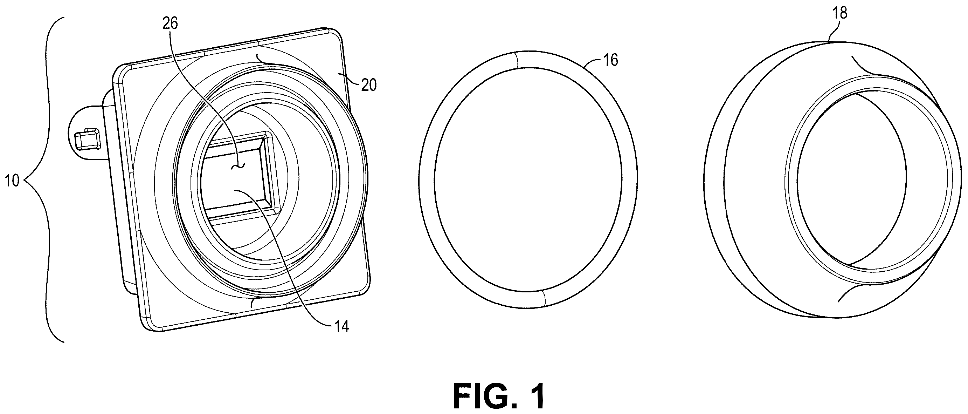

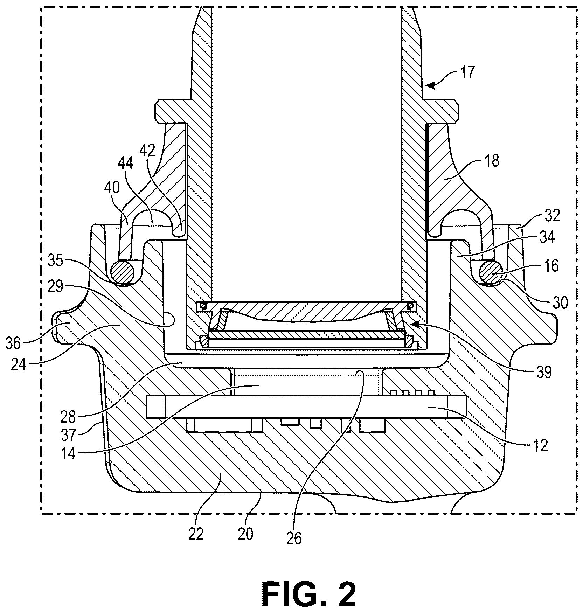

Referring to FIGS. 1-4, a first exemplary arrangement a camera module sub-assembly 10 that is adapted for use on or in a vehicle in connection with a vehicle vision system. The camera module sub-assembly 10 includes a printed circuit board 12, an imaging sensor 14, a seal element 16, a lens mount 18, as well as an outer housing 20. The lens mount 18 is configured to house a lens arrangement 17 (schematically represented in FIG. 2) therein. The lens mount 18, with the lens arrangement therein, is secured to the outer housing 20 such that the lens arrangement function to focus and direct and refract and image a scene at a field of view of the lens arrangement 17 onto the imaging sensor 14. The outer housing 20 is molded over and around the circuit board 12 and the lens mount 18 is secured to the outer housing 20 so as to substantially or entirely encase or encapsulate the circuit board 12, associated circuitry, and imaging sensor 14 within the molded outer housing 20, as will be discussed in further detail below.

The circuit board 12 of the camera module sub-assembly 10 may include an imaging capture device or sensor 14 for capturing an image of a scene, such as an exterior of a vehicle, or an interior area of a vehicle. The imaging sensor 14 may comprise an imaging array sensor, such as a CMOS sensor or a CCD sensor.

As can be seen most clearly in FIG. 2, outer housing 20 is molded over and around the circuit board 12 to substantially encase and encapsulate the circuit board 12 and related circuitry thereon. The outer housing 20 is configured with a base portion 22 and an annular wall portion 24. The circuit board 12 and imaging sensor 14 is encapsulated within the base portion 22 of the outer housing 20, with a top surface 26 of the imaging sensor 14 being exposed so as to align with a camera lens arrangement 17.

**The** annular wall portion 24 extends upwardly from the base portion 22 and defines a central cavity 28 defined by an inner wall surface 29 of the annular wall portion 24. A top end of the annular wall portion 24 includes a mounting groove 30. The mounting groove 30 is defined by a first outer wall member 32 and a second inner wall member 34 that is spaced inwardly from the first outer wall member 32. In one exemplary arrangement, a height of the second inner wall member 34 is sightly less than a height of the first outer wall member 32.

The mounting groove 30 is positioned between the first outer wall member 32 and the second inner wall member 34 and is further defined by a bottom surface 35. In one exemplary arrangement, the bottom surface 35 may be curved.

**An** outer surface 37 of the annular wall portion 24 may further include a mounting flange 36 disposed thereon. In one exemplary arrangement, the mounting flange 36 may further comprise mounting ears (not shown in FIGs. 1-4), discussed in further detail below. The mounting ears and mounting flange 36 assist in mounting the camera module sub-assembly 10 within a vehicle.

The seal element 16 is disposed within the mounting groove 30. In one exemplary arrangement, the seal element 16 is configured as an O-ring.

The lens arrangement 17 is disposed and secured to the lens mount 18. As may be seen in FIG. 2, the lens arrangement 17 includes one or more lenses 39 therein to focus the camera. The lens arrangement lenses 39 may be secured within the lens arrangement 17 in any known manner so as to define an optional path therethrough in a known manner.

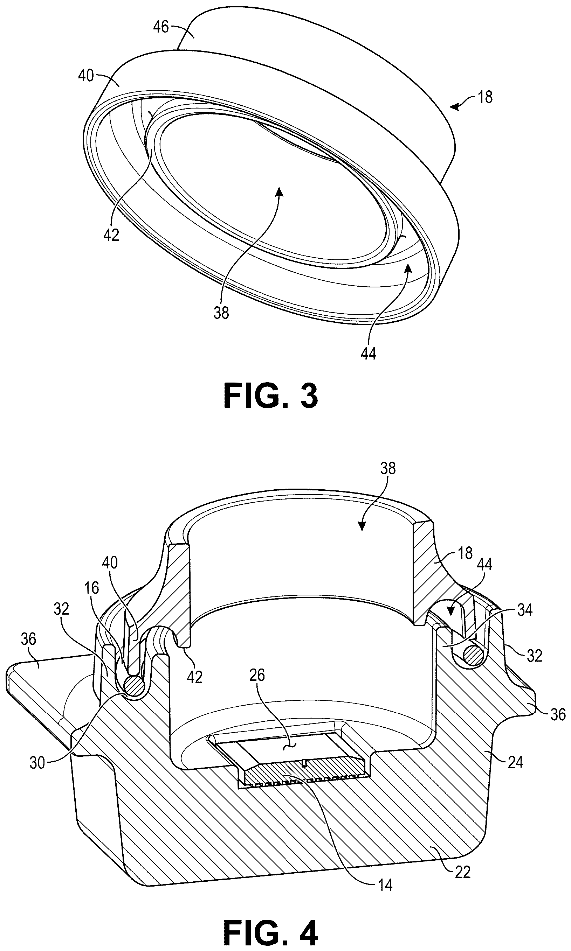

The lens mount 18, best seen in FIG. 3, is an annular member that defines a central channel 38. The central channel 38 receives the lens arrangement 17. The lens mount 18 further includes an outer wall member 40 and an inner wall member 42. The outer wall member 40 and inner wall member 42 are spaced apart from one another and defines a retaining groove 44 therebetween. In one exemplary arrangement, the outer wall member 40 has a length that is longer than a length of the inner wall member 42. The outer wall member 40 and inner wall member 42 converge to form a top section 46 of the lens mount 18.

Referring to FIG. 1, after the printed circuit board 12 and the imaging sensor 14 are molded into the housing 20, the seal element 16 is disposed within the mounting groove 30 of the housing 20. The lens mount 18, with the lens arrangement 17 secured thereto, is then directed to engage with the housing 20. More specifically, the outer wall member 40 is positioned within the mounting groove 30 of the housing 20, on top of the seal element 16, disposed therein. The inner wall member 42 may be utilized as a centering element against the inner wall surface 29 of the housing 20. With this arrangement, the position of the lens mount 18 may be selectively adjusted within the mounting groove 30 to allow for adjustment of the focus of the lens arrangement 17 for yaw, pitch and roll alignment, due to the interaction of the outer wall member 40 with the seal element 16. Once a desired focus is reached, the lens arrangement 17 and housing 20 are held stationary, while glue disposed within the mounting groove 30 is able to cure. This arrangement thus allows for relaxed manufacturing tolerances, without sacrificing alignment issues for the lens arrangement 17.

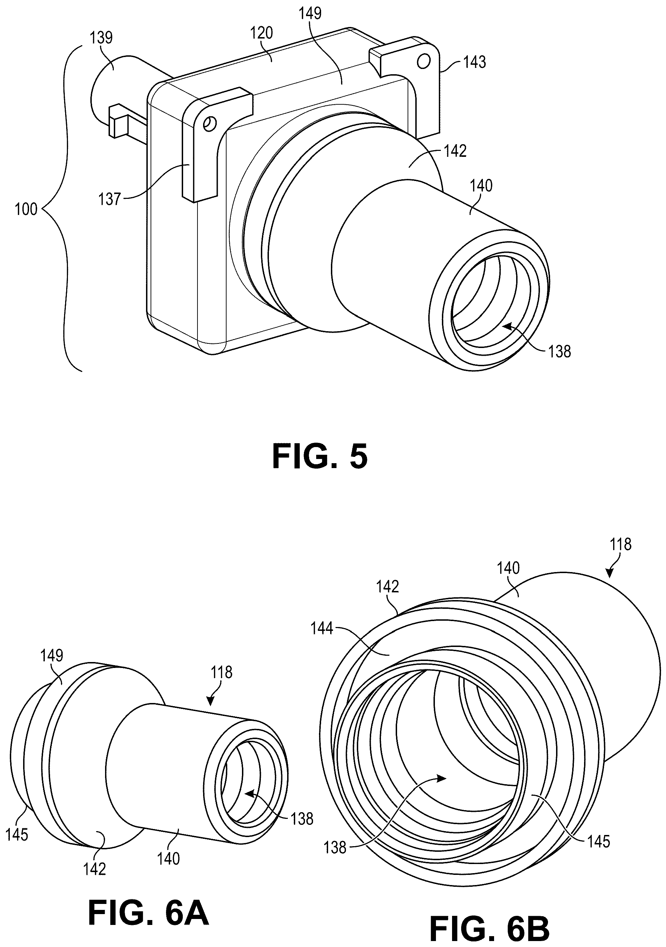

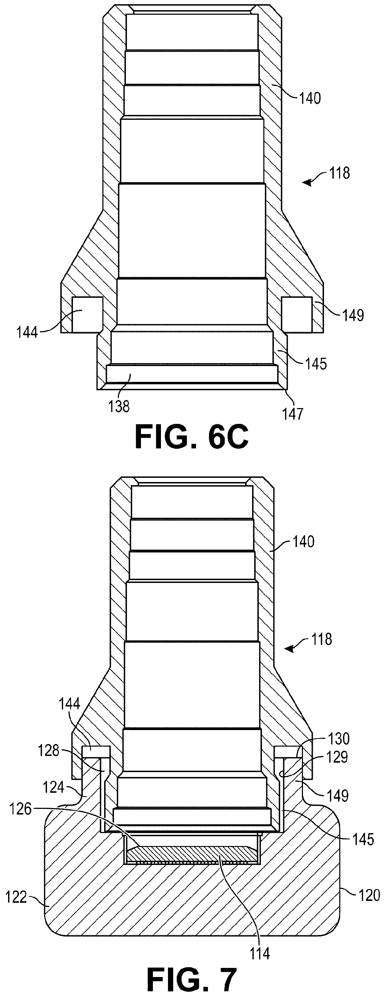

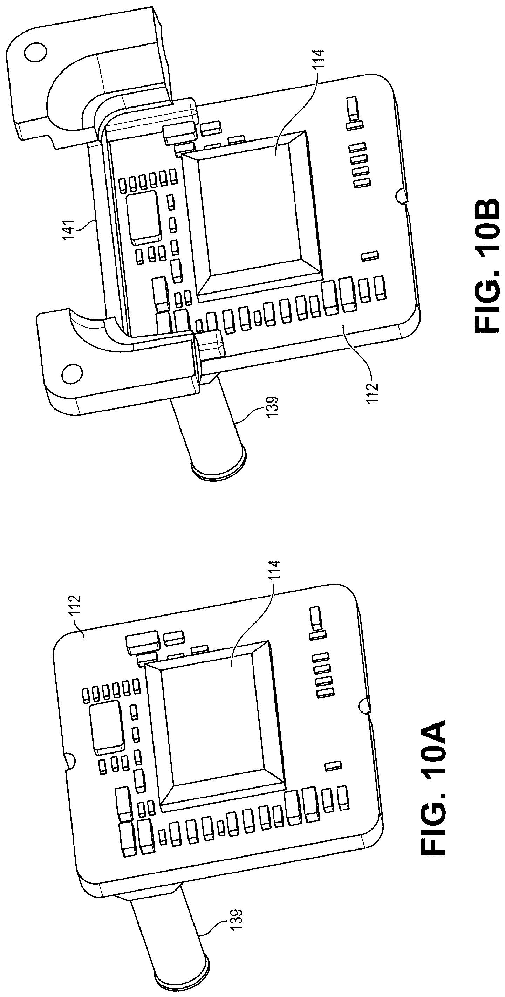

Referring to FIGS. 5-9, a second exemplary arrangement of a camera module sub-assembly 100 that is adapted for use on or in a vehicle in connection with a vehicle vision system is shown. The camera module sub-assembly 100 is similar to the camera module sub-assembly 10 and includes a printed circuit board 112 (shown in FIGS. 10A-10B), an imaging sensor 114 (see Fig. 7), a lens mount 118, as well as an outer housing 120. The lens mount 118 is configured to house a lens arrangement (not shown) therein. The lens mount 118, with the lens arrangement therein, is secured to the outer housing 120 such that the lens arrangement functions to focus and direct and refract and image a scene at a field of view of the lens arrangement onto the imaging sensor 114. The outer housing 120 is molded over and around the circuit board 112 and the lens mount 118 is secured to the outer housing 120 so as to substantially or entirely encase or encapsulate the circuit board, associated circuitry, and imaging sensor 114 within the molded outer housing 120, as will be discussed in further detail below.

The circuit board of the camera module sub-assembly 100 includes an imaging capture device or sensor 114 for capturing an image of a scene, such as an exterior of a vehicle, or an interior area of a vehicle. The imaging sensor 114 may comprise an imaging array sensor, such as a CMOS sensor or a CCD sensor.

As can be seen most clearly in FIG. 7, outer housing 120 is molded over and around the circuit board to substantially encase and encapsulate the circuit board 112 and related circuitry thereon and fix the image sensor 114 in place within the outer housing 120. The outer housing 120 is configured with a base portion 122 and an annular wall portion 124. The circuit board 112 and imaging sensor 114 are encapsulated within the base portion 122 of the outer housing 120, with a top surface 126 of the imaging sensor 114 being exposed so as to align with a camera lens arrangement.

**The** annular wall portion 124 extends upwardly from the base portion 122 and defines a central cavity 128 defined by an inner wall surface 129 of the annular wall portion 124. In one exemplary arrangement, the annular wall portion 124 is spaced from an outer periphery of the base portion 122, as shown in FIG. 7. A top end of the annular wall portion 124 defines a mounting surface 130. In one exemplary arrangement, the mounting surface 130 may be defined to be generally planar.

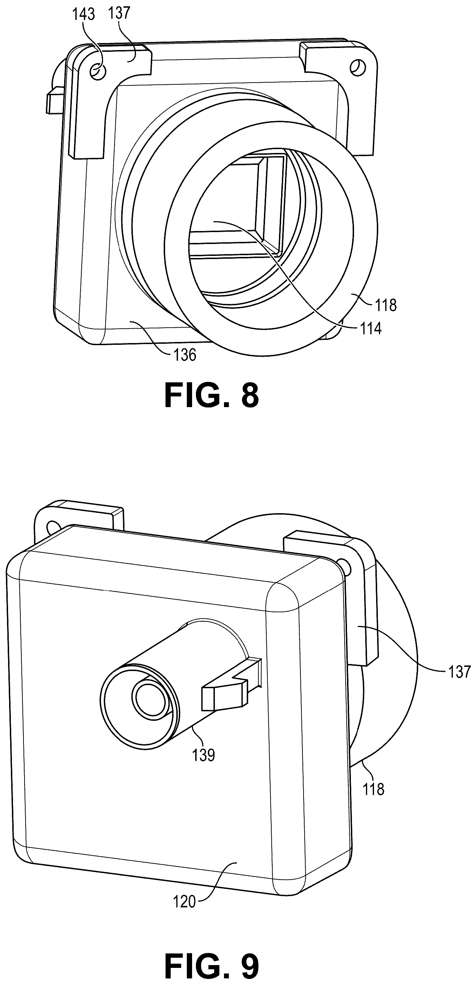

The base portion 122 may further include a mounting flange 136 defined thereon, best seen in FIG. 8. In one exemplary arrangement, the mounting flange 136 may further comprise mounting ears 137 secured thereto. The mounting ears 137 and mounting flange 136 assist in mounting the camera module sub-assembly 100 within a vehicle.

Referring to FIGS. 10A and 10B, the printed circuit board 112 may be seen, with the imaging sensor 114 secured thereon. A connector 139 for the printed circuit board 112 extends from a bottom surface of the printed circuit board 112.

In one exemplary arrangement, the mounting ears 137 are positioned along an edge of the printed circuit board 112. For example, in one exemplary arrangement, the mounting ear arrangement 137 includes a pair of mounting ears 137 connected together with a webbing 141, such that the mounting ear arrangement is a unitary element. The mounting ears 137 may further comprise openings 143 that are configured to receive a fastening element (not shown). The mounting ear arrangement may be attached to the printed circuit board 112 via an adhesive substrate or tool insert. In one exemplary arrangement, the mounting ear arrangement may be constructed of metal, such as, for example, aluminum.

After the mounting ears 137 are fixed to the printed circuit board 112, the outer housing 120 is molded over the printed circuit board 112 and portions of the mounting ear arrangement, such that the mounting ears 137 remain exposed. Similarly, the top surface of the imaging sensor 114 also remains exposed after the molding operation. In addition, the mold operation also overmolds the connector 139. The outer housing 120 may be constructed of a durable thermoset material, such, for example, Epoxidur^{®}.

A lens arrangement (not shown) is disposed and secured to the lens mount 118. As discussed in connection with the exemplary arrangement in FIG. 2, the lens arrangement includes one or more lenses therein to focus the camera, as is well-known in the art. The lens arrangement lenses may be secured within the lens arrangement in any known manner.

The lens mount 118, best seen in FIGS. 6A-6C, is an annular member that defines a central channel 138. The central channel 138 receives the lens arrangement. The lens mount 118 is defined by an elongated end section 140 and a transition section 142. Extending from the transition section 140 is an annular inner wall member 145. The inner wall member 145 defines an end face 147 of the lens mount 118.

The transition section 142 extends outwardly from the elongated end section 140 and includes an outer wall section 149. The outer wall section 149 is spaced from the inner wall member 145 and defines a retaining groove 144 therebetween. The outer wall member 149 has a length that is shorter than a length of the inner wall member 145.

Referring to FIG. 7, after the printed circuit board 112 and the imaging sensor 114 are molded into the housing 120, the lens mount 118, with the lens arrangement secured therein (not shown), is then directed to engage with the housing 120. More specifically, the annular wall section 124 is positioned within the retaining groove 144 of the lens mount 118, such that the mounting surface 130 of the annular wall section 124 engages against an engagement surface positioned between the inner wall member 145 and the outer wall member 149 of the retaining groove 144. When in this position, the inner wall member 145 will extend inwardly along an inner surface of the outer housing 120, surrounding the imaging sensor 114. Once positioned, the lens arrangement will be aligned with the imaging sensor 114 using known alignment techniques and then the lens mount 118 will be fixedly connected to the outer housing 120. In one exemplary arrangement, the lens mount 118 will be fixed to the outer housing 120 via laser welding along an outer circumference of the outer wall member 149, where it meets with the annular wall section 124.

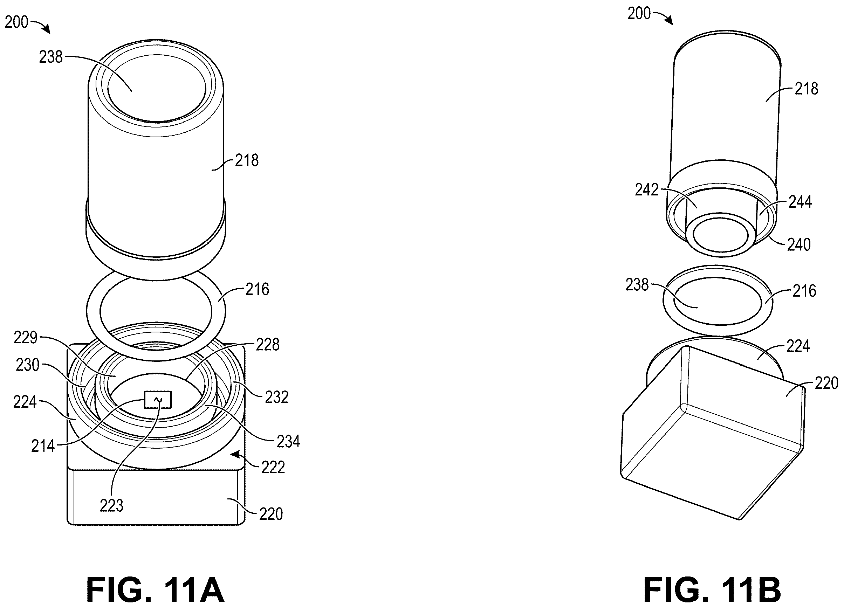

Referring to FIGS. 11A-11B, a further exemplary arrangement of a camera module sub-assembly 200 that is adapted for use on or in a vehicle in connection with a vehicle vision system is shown. The camera module sub-assembly 200 is similar to the camera module sub-assembly 10 and includes a printed circuit board (not shown, but generally the same as that shown in FIG. 10A), an imaging sensor 214, a sealing member 216, a lens barrel 218, as well as an outer housing 220. The lens mount 218, with the lens arrangement therein, is secured to the outer housing 220 such that the lens arrangement functions to focus and direct and refract and image a scene at a field of view of the lens arrangement onto the imaging sensor 214. The outer housing 220 is molded over and around the circuit board and the lens mount 218 is secured to the outer housing 220 so as to substantially or entirely encase or encapsulate the circuit board, associated circuitry, and imaging sensor 214 within the molded outer housing 220.

The outer housing 220 is configured with a base portion 222 and an annular wall portion 224. The circuit board and imaging sensor 214 is encapsulated within the base portion 222 of the outer housing 220, with a top surface 223 of the imaging sensor 214 being exposed so as to align with the lens arrangement disposed within the lens barrel 218.

**An** annular wall portion 224 extends upwardly from the base portion 222 and defines a central cavity 228 defined by an inner wall surface 229 of the annular wall portion 224. A top end of the annular wall portion 224 includes a mounting groove 230. The mounting groove 230 is defined by a first outer wall member 232 and a second inner wall member 234 that is spaced inwardly from the outer wall member 232. In one exemplary arrangement, a height of the second inner wall member 234 may be configured to be sightly smaller than a height of the first outer wall member 232.

The mounting groove 230 is positioned between the first outer wall member 232 and the second inner wall member 234 and is further defined by a bottom surface, as best seen in FIG. 11A. In one exemplary arrangement, the bottom surface may be configured with a concave, or curved surface. Alternatively, the bottom surface may be configured to be substantially planar.

The seal element 216 is disposed within the mounting groove 230. In one exemplary arrangement, the seal element 216 is configured as an O-ring. For those arrangements where the bottom surface is configured to be concaved-shaped, the shape of the O-ring may be complementary with the curved shaped of the bottom surface to provide a greater seal interface between the O-ring and the bottom surface.

The lens barrel 218 is an annular member that defines a central channel 238. The central channel 238 receives the lens arrangement. The lens barrel 218 further includes an outer wall member 240 and an inner wall member 242. The outer wall member 240 and inner wall member 242 are spaced apart from one another and defines a retaining groove 244 therebetween. The outer wall member 240 has a length that is shorter than a length of the inner wall member 242, such that the inner wall member 242 extends past an end of the outer wall member 240.

After the printed circuit board and the imaging sensor 214 are molded into the housing 220, the seal element 216 is disposed within the mounting groove 230 of the housing 220. The lens barrel 218, with the lens arrangement secured therein, is then directed to engage with the housing 220 in a tongue and groove manner. More specifically, the outer wall member 240 is positioned within the mounting groove 230 of the housing 220, on top of the seal element 216, disposed therein. The inner wall member 242 may be utilized as a centering element against an inner wall surface of the housing 220. With this arrangement, the position of the lens mount 218 may be selectively adjusted within the mounting groove 230 to allow for adjustment of the focus of the lens arrangement for yaw, pitch and roll alignment, due to the interaction of the outer wall member 240 with the seal element 216. Once a desired focus is reached, the lens barrel 218 and housing 220 are held stationary, while glue or other suitable adhesive or joining materials is disposed within the mounting groove 230 is able to cure. This arrangement thus allows for relaxed manufacturing tolerances, without sacrificing alignment issues for the lens arrangement.

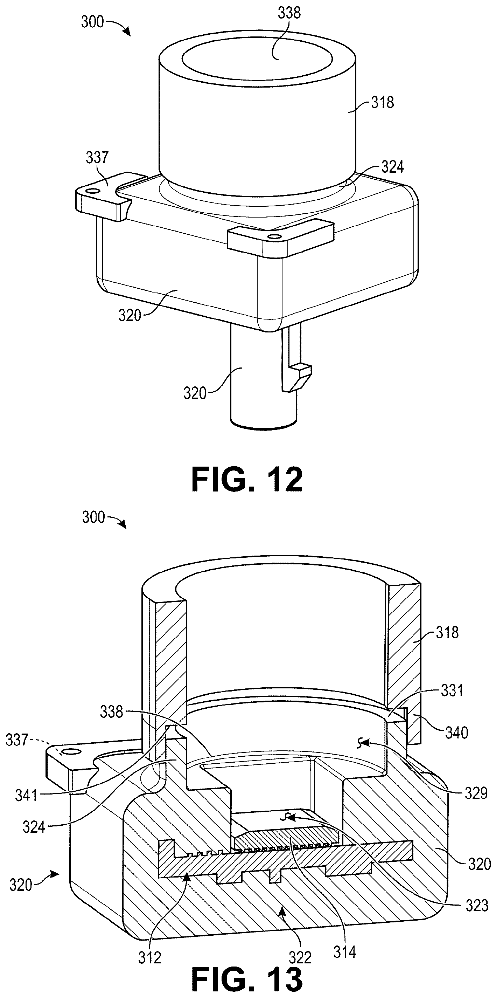

Referring to FIGS. 12-13, a fourth exemplary arrangement of a camera module sub-assembly 300 that is adapted for use on or in a vehicle in connection with a vehicle vision system is shown. The camera module sub-assembly 300 is similar to the camera module sub-assembly 100 and includes a printed circuit board 312, an imaging sensor 314, a lens mount 318, as well as an outer housing 320. The lens mount 318 is configured to house a lens barrel with a lens arrangement (not shown) therein. The lens mount 318, with the lens barrel therein, is secured to the outer housing 320 such that the lens barrel functions to focus and direct and refract and image a scene at a field of view of the lens arrangement onto the imaging sensor 314. The outer housing 320 is molded over and around the circuit board 312 so as to substantially or entirely encase or encapsulate the circuit board 312, associated circuitry, and imaging sensor 314 within the molded outer housing 320.

More specifically, the circuit board 312 of the camera module sub-assembly 300 includes an imaging capture device or imaging sensor 314 for capturing an image of a scene, such as an exterior of a vehicle, or an interior area of a vehicle. The imaging sensor 314 may comprise an imaging array sensor, such as a CMOS sensor or a CCD sensor.

As can be seen in FIG. 13, outer housing 320 is molded over and around the circuit board 312 to substantially encase and encapsulate the circuit board 312 and related circuitry thereon and fix the image sensor 314 in place within the outer housing 320. The outer housing 320 is configured with a base portion 322 and an annular wall portion 324 extending upwardly from the base portion 322. The circuit board 312 and imaging sensor 314 are encapsulated within the base portion 322 of the outer housing 320, with a top surface 323 of the imaging sensor 314 being exposed so as to align with a camera lens arrangement.

The annular wall portion 324 extends upwardly from the base portion 322 and defines a central cavity 338 defined by an inner wall surface 329 of the annular wall portion 324. In one exemplary arrangement, the annular wall portion 324 is spaced from an outer periphery of the base portion 322, as shown in FIG. 13. A top end of the annular wall portion 324 defines a mounting surface 331. The mounting surface 331 may be defined to be generally planar.

The base portion 322 may further include mounting ears 337. The mounting ears 337 assist in mounting the camera module sub-assembly 300 within a vehicle.

Referring to FIG. 13, after the printed circuit board 312 and the imaging sensor 314 are molded into the housing 320, the lens mount 318, with the lens barrel (not shown) secured thereto, is then directed to engage with the housing 320. More specifically, an outer wall member 340 is positioned around the annular wall portion 324 of the housing 320 until an engagement surface 341 engages against the mounting surface 331. With this arrangement, the position of the lens mount 318 may be selectively adjusted against the mounting surface 330 to allow for adjustment of the focus of the lens arrangement for yaw, pitch and roll alignment, due to the interaction of the outer wall member 340 with the annular wall portion. Once a desired focus is reached, the lens mount 318and housing 320 are held stationary, while glue or other suitable adhesive is disposed between the mounting surface 330 and the engagement surface 341 is able to cure. This arrangement thus allows for relaxed manufacturing tolerances, without sacrificing alignment issues for the lens arrangement.

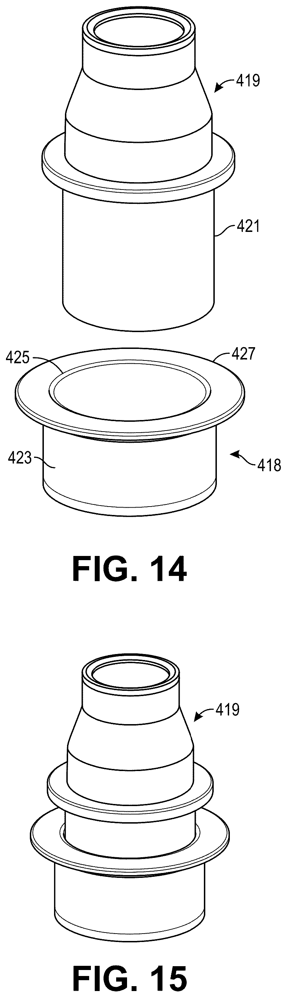

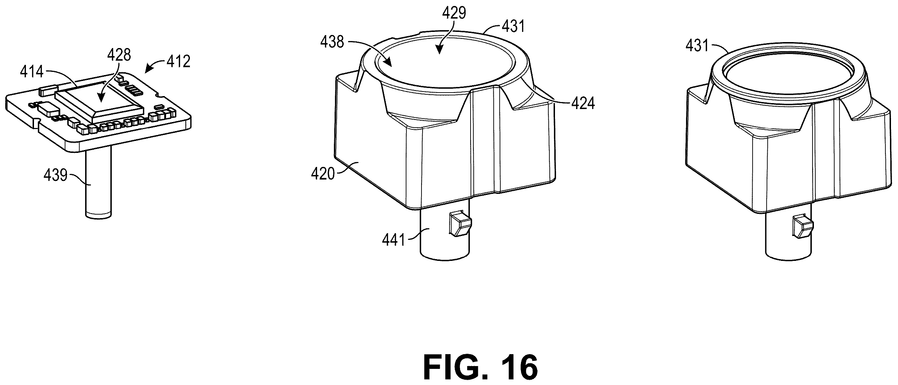

Referring to FIGS. 14-19, a further exemplary arrangement of a camera module sub-assembly 400 (see FIG. 16) is shown that is adapted for use on or in a vehicle in connection with a vehicle vision system. Similar to the camera module sub-assembly 300, camera module sub-assembly 400 includes a printed circuit board 412, an imaging sensor 414, a lens mount 418, a lens assembly 419, as well as an outer housing 420.

The lens mount 418 is configured to house a lens barrel 421 that houses a lens arrangement (not shown) therein. The lens mount 418 is defined by a base member 423 that defines a central opening 425 therein. A flange 427 may extend from a top surface of the base member 423. The lens mount 418, with the lens barrel 421 therein, is secured to the outer housing 420 such that the lens barrel 421 functions to focus and direct and refract an image scene at a field of view of the lens arrangement 419 onto the imaging sensor 414.

Referring to FIG. 16, the outer housing 420 is molded over and around the circuit board 412 so as to substantially or entirely encase or encapsulate the circuit board 412, associated circuitry, and imaging sensor 414 within the molded outer housing 420. More specifically, the circuit board 412 of the camera module sub-assembly 400 includes an imaging capture device or imaging sensor 414 for capturing an image of a scene, such as an exterior of a vehicle, or an interior area of a vehicle. The imaging sensor 414 may comprise an imaging array sensor, such as a CMOS sensor or a CCD sensor. A connector 439 for the printed circuit board 112 extends from a bottom surface of the printed circuit board 112.

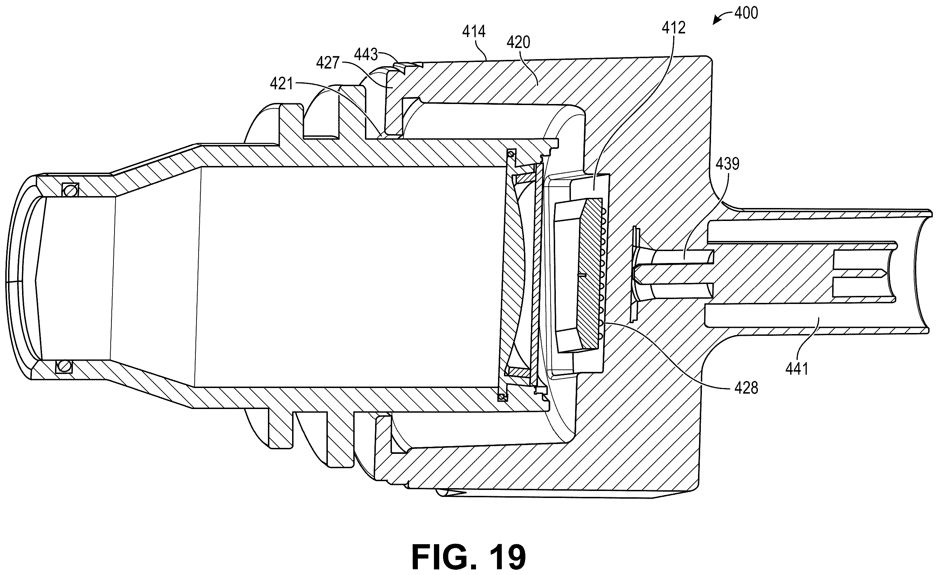

As can be seen in FIG. 19, outer housing 420 is molded over and around the circuit board 412 to substantially encase and encapsulate the circuit board 412 and related circuitry thereon and fix the image sensor 414 in place within the outer housing 420. In addition, the connector 439 is overmolded 441 as well. The outer housing 420 is configured with a base portion 422 and an annular wall portion 424 extending upwardly from the base portion 422. The circuit board 412 and imaging sensor 414 are encapsulated within the base portion 422 of the outer housing 420, with a top surface 428 of the imaging sensor 414 being exposed so as to align with a camera lens arrangement.

The annular wall portion 424 extends upwardly from the base portion 422 and defines a central cavity 438 defined by an inner wall surface 429 of the annular wall portion 424. A top end of the annular wall portion 424 defines a mounting surface 431. The mounting surface 431 may be defined to be generally planar.

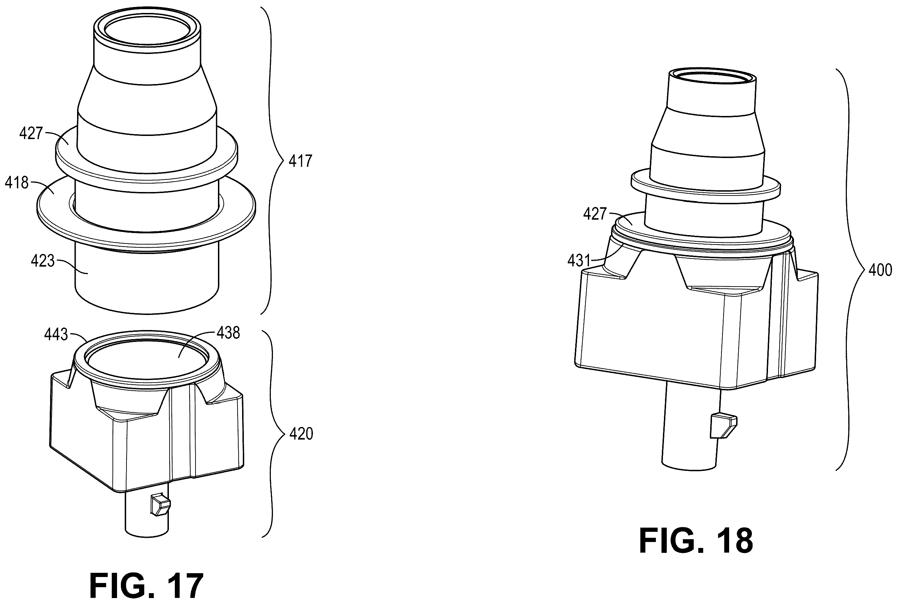

Referring to FIGS. 17-19, after the printed circuit board 412 and the imaging sensor 414 are overmolded into the housing 420, the lens mount 418, with the lens assembly 419 secured thereto, is then directed to engage with the outer housing 420, as shown in FIGs. 17 and 18. The lens assembly 419 may be frictionally engaged with an inner wall of the base member 423 of the lens mount 418 or secured in other known manners.

Once the lens assembly 419 is secured to the lens mount 418, as shown in FIG. 15, a suitable adhesive 443 is applied to the mounting surface 431 (as best seen in FIG. 17). The base member 423 of the lens mount 418 is inserted into the central cavity 438 of the outer housing 420. An underside of the flange 427 of the lens mount 418 engages with the adhesive 443, but allows suitable positioning of the lens assembly 419 with respect to the imaging sensor 414. Once positioned, as shown in FIG. 18, the adhesive 427 is allowed to cure to secure the lens assembly 419 to the outer housing 420. This arrangement thus allows for relaxed manufacturing tolerances, without sacrificing alignment issues for the lens arrangement 419.

What have been described above are examples of the present disclosure. It is, of course, not possible to describe every conceivable combination of components or methodologies for purposes of describing the present invention, but one of ordinary skill in the art will recognize that many further combinations and permutations of the present invention are possible. While certain novel features of this disclosure shown and described below are pointed out in the annexed claims, the disclosure is not intended to be limited to the details specified, since a person of ordinary skill in the relevant art will understand that various omissions, modifications, substitutions and changes in the forms and details of the disclosure illustrated and in its operation may be made without departing in any way from the spirit of the present disclosure. Accordingly, the present disclosure is intended to embrace all such alterations, modifications, and variations that fall within the scope of the appended claims. As used herein, the term "includes" means includes but not limited to, the term "including" means including but not limited to. The term "based on" means based at least in part on. Additionally, where the disclosure or claims recite "a," "an," "a first," or "another" element, or the equivalent thereof, it should be interpreted to include one or more than one such element, neither requiring nor excluding two or more such elements. No feature of the disclosure is critical or essential unless it is expressly stated as being "critical" or "essential."

### Element List

- 10: camera module sub-assembly
- 12: printed circuit board
- 14: imaging sensor
- 16: seal element
- 18: Lens mount
- 20: outer housing
- 17: lens arrangement
- 22: base portion
- 24: annular wall portion
- 26: top surface of the imaging sensor
- 28: central cavity
- 29: inner wall surface
- 30: mounting groove
- 32: first outer wall member
- 34: second outer wall member
- 35: bottom surface of groove
- 36: mounting flange
- 37: outer surface of annular wall portion
- 38: central channel of lens mount
- 39: lens
- 40: outer wall member of lens mount
- 42: inner wall member of lens mount
- 44: retaining groove of lens mount
- 46: top section of lens mount
- 100: camera module sub-assembly
- 112: printed circuit board
- 114: imaging sensor
- 118: Lens mount
- 120: outer housing
- 122: base portion
- 124: annular wall portion
- 126: top surface of imaging sensor
- 128: central cavity
- 129: inner wall surface
- 130: mounting surface
- 136: mounting flange
- 137: mounting ears
- 138: central channel of lens mount
- 139: connector
- 140: elongated end section of lens mount
- 141: webbing
- 142: transition section of lens mount
- 143: openings in mounting ears
- 144: retaining groove
- 145: annular inner wall member
- 147: end face of the lens mount
- 149: outer wall section lens mount
- 200: camera moduel sub-assembly
- 214: imaging sensor
- 216: sealing member
- 218: lens barrel
- 220: outer housing
- 222: base portion
- 224: annular wall portion
- 223: top surface
- 224: annular wall
- 228: central cavity
- 229: inner wall surface
- 230: mounting groove
- 232: outer wall member
- 234: inner wall member
- 238: central channel
- 240: outer wall member of lens barrel
- 242: inner wall member of lens barrel
- 244: retaining groove 244
- 300: camera module sub-assembly
- 312: printed circuit board
- 314: imaging sensor
- 318: lens mount
- 320: outer housing
- 322: base portion
- 323: top surface of imaging sensor
- 324: annular wall portion
- 338: central cavity of annular wall portion
- 329: inner wall surface
- 330: mounting surface
- 340: outer wall member
- 341: engagement surface
- 400: camera module sub-assembly
- 412: printed circuit board
- 414: imaging sensor
- 418: lens mount
- 419: lens assembly
- 420: outer housing
- 421: lens barrel
- 422: base portion
- 423: base member
- 424: annular wall portion
- 425: central opening
- 427: flange
- 428: top surface of image sensor
- 429: inner wall surface
- 431: mounting surface
- 438: central cavity
- 439: connector
- 441: overmold of connector
- 443: adhesive

## Claims

1. A camera module for a vehicle vision system, comprising:
a housing element;
a circuit board;
an imaging sensor operatively connected to the circuit board; and
a lens arrangement that includes at least one lens element and an optical path extending through the at least one lens element and the imaging sensor;
wherein the housing element is molded over the circuit board to encapsulate the circuit board within the housing element and fixing the imaging sensor within the housing element; and
wherein the housing element includes a mounting element that cooperates with a corresponding mounting element disposed on the lens arrangement to secure the lens arrangement to the housing element.

2. The camera module of claim 1, wherein the housing element further comprises a seal element disposed between the housing element and the lens arrangement.

3. The camera module of claim 1, wherein the lens arrangement further comprises a lens mount and a lens barrel, wherein the lens mount defines an opening therethrough that receives the lens barrel, and wherein the lens barrel further comprises the at least one lens element disposed therein.

4. The camera module of claim 3, wherein the lens mount comprises an outer wall member and an inner wall member spaced from the outer wall member to define a retaining groove therebetween and wherein the housing includes an annular wall portion that has a top end that includes a mounting groove defined by a first outer wall member and a second inner wall member that is spaced inwardly from the outer wall member.

5. The camera module of claim 4, wherein a height of the second inner wall member is less than a height of the first outer wall member of the annular wall portion, and/or wherein a seal member is disposed within the mounting groove and wherein the outer wall member of the lens mount is inserted on top of the seal member within the mounting groove, and/or wherein the second inner wall member is disposed within the retaining groove.

6. The camera module of claim 1, further comprising ear mounts disposed on a portion of the housing, and/or wherein the lens arrangement further comprises an elongated end section and a transition section that extends outwardly from the elongated end section.

7. The camera module of claim 6, wherein the transition section further comprises an outer wall section spaced from an annular inner wall section to define a retaining groove therebetween.

8. The camera module of claim 7, wherein the outer wall section has a length that is shorter than a length of annular inner wall member, or wherein the housing element further comprises an annular wall portion that is received within the retaining groove of the lens arrangement.

9. The camera module of claim 1, wherein the housing element comprises a base portion, an annular wall portion extending upwardly from the base portion, and an inner wall member extending upwardly from the base portion, wherein the inner wall member defines a cavity therein and wherein there is a mounting groove defined between the inner wall member and the annular wall portion.

10. The camera module of claim 9, wherein the lens arrangement comprises an outer wall member and an inner wall member, wherein the inner wall member is longer than the outer wall member, and wherein the inner wall member is configured to be seated within the mounting groove, and/or wherein a seal member is disposed between the lens arrangement and the housing member, within the mounting groove.

11. The camera module of claim 1, wherein the lens arrangement comprises a lens mount that mounts directly to the housing member, wherein the housing member includes an annular wall member extending upwardly from a base member, a top surface of the annular wall member defined a mounting surface.

12. The camera module of the claim 11, wherein the lens mount further comprises an outer wall member that extends downwardly beyond an engagement surface, wherein the engagement surface is configured to mate with the mounting surface of the housing member.

13. The camera module of claim 12, wherein an adhesive is disposed between the engagement surface and the mounting surface.

14. The camera module of claim 11, wherein the lens mount is defined by a base member and a flange member, wherein the base member of the lens mount is sized to be received within a central cavity of the basis member of the housing member, and the flange member is configured to mate with the mounting surface of the housing member.

15. The camera module of claim 14, wherein an adhesive is disposed on the mounting surface of the housing member, before the flange member mates with the mounting surface.
